# EUROPÄISCHE PATENTSCHRIFT

(11) **EP 3 201 678 B1**
(45) Veröffentlichungstag und Bekanntmachung des Hinweises auf die Patenterteilung: **18.03.2020**
(21) Anmeldenummer: 15767139.7
(22) Anmeldetag: 21.09.2015
(51) Int. Cl.: G02C 7/08, G02B 27/01

(54) **BRILLENGLAS FÜR EINE AUF DEN KOPF EINES BENUTZERS AUFSETZBARE UND EIN BILD ERZEUGENDE ANZEIGEVORRICHTUNG SOWIE ANZEIGEVORRICHTUNG MIT EINEM SOLCHEN BRILLENGLAS**
SPECTACLE LENS FOR A DISPLAY DEVICE WHICH CAN BE PLACED ON THE HEAD OF A USER AND WHICH GENERATES AN IMAGE, AND DISPLAY DEVICE COMPRISING SUCH A SPECTACLE LENS
VERRE DE LUNETTES POUR DISPOSITIF D'AFFICHAGE POUVANT ÊTRE PLACÉ SUR LA TÊTE D'UN UTILISATEUR ET GÉNÉRANT UNE IMAGE ET DISPOSITIF D'AFFICHAGE POURVU D'UN TEL VERRE DE LUNETTE

(30) Priorität: 30.09.2014 DE 102014114238
(43) Veröffentlichungstag der Anmeldung: 09.08.2017
(73) Patentinhaber: tooz technologies GmbH, 73430 Aalen (DE)
(72) Erfinder: WIDULLE, Frank, 89233 Neu-Ulm (DE)
(74) Vertreter: Patentanwälte Geyer, Fehners & Partner mbB
(86) Internationale Anmeldenummer: PCT/EP2015/071592
(87) Internationale Veröffentlichungsnummer: WO 2016/050546

(56) Entgegenhaltungen:
- WO-A1-2014/115260
- DE-A1- 2 657 224
- DE-A1-102011 007 812
- US-A1- 2012 249 899
- US-A1- 2014 254 024
- US-B2- 8 177 361

## Beschreibung

Die vorliegende Erfindung betrifft ein Brillenglas für eine auf den Kopf eines Benutzers aufsetzbare und ein Bild erzeugende Anzeigevorrichtung mit den Merkmalen des Oberbegriffs des Anspruches 1 sowie eine Anzeigevorrichtung mit einem solchen Brillenglas.

Bei einem solchen Brillenglas weist der Auskoppelabschnitt häufig zumindest eine reflektive Fläche auf, die im Brillenglas vergraben ist, was dazu führt, dass die Herstellung eines solchen Brillenglases aufwendig ist. Die US 2014/0254024 A1 und die US 8 177 361 B2 zeigen jeweils ein Brillenglas mit den Merkmalen des Oberbegriffs des Anspruches 1.

Ausgehend davon ist es Aufgabe der vorliegenden Erfindung, ein Brillenglas der eingangs genannten Art so weiterzubilden, dass es leicht herstellbar ist.

Erfindungsgemäß wird die Aufgabe bei einem Brillenglas der eingangs genannten Art dadurch gelöst, dass sich die Kontaktfächen vom Rand des Brillenglases entlang einer vorbestimmten Länge in einer zweiten Richtung, die quer zur ersten Richtung verläuft, erstrecken.

Die Kontaktflächen können sich insbesondere über die gesamte Dicke des Brillenglases erstrecken.

Durch diesen Aufbau liegt eine Teilung des Brillenglases quer zur ersten Richtung vor, so dass einerseits der Auskoppelabschnitt leicht in einem oder in beiden Teilbrillengläsern gebildet werden kann und andererseits die beiden Teilbrillengläser über die Kontaktflächen sicher und gut miteinander verbunden werden können.

Insbesondere können die Kontaktflächen miteinander verklebt oder verkittet sein.

Der Auskoppelabschnitt kann zumindest eine reflektive Fläche aufweisen, die im ersten und/oder zweiten Teilbrillenglas ausgebildet ist. Bei der zumindest einen reflektiven Fläche handelt es sich insbesondere um eine gekrümmte Fläche. Ferner kann der Auskoppelabschnitt mehrere reflektive Flächen aufweisen, die auch als reflektive Facetten bezeichnet werden können. Die reflektiven Facetten können zueinander versetzt in Art einer Zick-Zack-Linie oder Sägezahnlinie angeordnet sein.

Die zumindest eine reflektive Fläche kann sich von der Vorderseite bis zur Rückseite des Brillenglases erstrecken. Es ist jedoch auch möglich, dass sich die zumindest eine reflektive Fläche nicht über die gesamte Dicke (Ausdehnung von der Vorderseite bis zur Rückseite) des Brillenglases erstreckt, sondern beispielsweise nur über einen Teil davon. Insbesondere kann die reflektive Fläche als vergrabene reflektive Fläche ausgebildet sein, so dass sie sich nicht bis zur Vorderseite und/oder nicht bis zur Rückseite des Brillenglases erstreckt. Die reflektive Fläche kann sich beispielsweise über 20 bis 80 % der Ausdehnung des Brillenglases von der Vorderseite bis zur Rückseite erstrecken. Es ist auch eine Erstreckung im Bereich von 30 bis 70 % oder 40 bis 60 % der Dicke des Brillenglases von der Vorderseite bis zur Rückseite möglich.

Insbesondere kann der Auskoppelabschnitt eine strahlumlenkende und/oder eine abbildende Eigenschaft aufweisen.

Bei dem erfindungsgemäßen Brillenglas kann zur Ausbildung des Auskoppelabschnittes in einem der beiden Teilbrillengläser eine Ausnehmung und im anderen der beiden Teilbrillengläser ein dazu komplementärer vorstehender Abschnitt ausgebildet sein. Somit können die beiden Teilbrillengläser quasi zusammengesteckt werden.

Bei dem erfindungsgemäßen Brillenglas kann sich zumindest eine der Kontaktflächen vom Rand des Brillenglases entlang der zweiten Richtung bis zum Auskoppelabschnitt erstrecken. Insbesondere können die beiden Teilbrillengläser jeweils zwei Kontaktflächen aufweisen, die sich vom Rand des Brillenglases entlang der zweiten Richtung bis zum Auskoppelabschnitt erstrecken. Bei der Ausbildung mit Ausnehmung und vorstehendem Abschnitt können die beiden Kontaktflächen jeweils von der Ausnehmung bis zum Rand bzw. vom vorstehenden Abschnitt bis zum Rand verlaufen. Die beiden Kontaktflächen des ersten und zweiten Teilbrillenglases können jeweils in einer Ebene liegen. Es ist auch möglich, dass die beiden Kontaktflächen des ersten oder zweiten Teilbrillenglases zueinander versetzt und/oder verkippt sind. Insbesondere sind die Kontaktflächen der Teilbrillengläser so ausgerichtet, dass beim zusammengesetzten Brillenglas die Vorderseite und/oder Rückseite als durchgehende Fläche gebildet sind.

Die beiden Teilbrillengläser sind insbesondere aus dem gleichen Material gebildet.

Die zumindest eine reflektive Fläche kann eine reflektive Beschichtung aufweisen. Dabei kann die Reflektivität von nahezu 100 % erreicht werden. Es ist jedoch auch möglich, eine geringere Reflektivität bereitzustellen, so dass die reflektive Fläche als teilreflektive Fläche eingesetzt werden kann.

Des weiteren ist es möglich, die reflektive Fläche durch interne Totalreflexion zu verwirklichen.

Das erfindungsgemäße Brillenglas kann genau zwei Teilbrillengläser aufweisen.

Des weiteren ist es möglich, dass sich die zweite Richtung bei dem bestimmungsgemäßen Einsatz des erfindungsgemäßen Brillenglases senkrecht erstreckt.

Die Lichtführung im Lichtführungskanal kann beispielsweise durch Reflexion an Vorder- und Rückseite des Brillenglases erfolgen. Dabei kann es sich um eine innere Totalreflexion oder um eine Reflexion aufgrund einer entsprechenden teilreflektiven oder reflektiven Beschichtung handeln. Es ist jedoch auch möglich, dass die Führung mittels einer reflektiven Schicht innerhalb des Brillenglases bewirkt wird. Dabei kann eine reflektive Schicht vorgesehen sein, so dass die Vorder- oder Rückseite als weitere reflektive Fläche dient. Es können jedoch auch zwei voneinander beabstandete reflektive Schichten vorgesehen sein.

Es wird ferner eine Anzeigevorrichtung mit einer auf den Kopf eines Benutzers aufsetzbaren Haltevorrichtung, einem an der Haltevorrichtung befestigten Bilderzeugungsmoduls, das ein Bild erzeugt, und einer an der Haltevorrichtung befestigten Abbildungsoptik, die ein erfindungsgemäßes Brillenglas aufweist und dieses Bild im auf dem Kopf des Benutzers aufgesetzten Zustand der Haltevorrichtung so abbildet, dass es der Benutzer als virtuelles Bild wahrnehmen kann, bereitgestellt.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfasst. Das zumindest eine weitere optische Element kann beispielsweise einstückig mit einem der beiden Teilbrillengläser ausgebildet sein.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Teilschnittansicht des ersten Brillenglases einschließlich einer schematischen Darstellung des Bilderzeugungsmoduls;
- Fig. 3: eine schematische perspektivische Darstellung des ersten Brillenglases 3;
- Fig. 4: eine schematische, perspektivische Explosionsdarstellung des sersten Brillenglases 3;
- Fig. 5: eine vergrößerte Teilschnittansicht des ersten Brillenglases einschließlich einer schematischen Darstellung des Bilderzeugungsmoduls nach einer weiteren Ausführungsform;
- Fig. 6: eine vergrößerte Teilschnittansicht des ersten Brillenglases einschließlich einer schematischen Darstellung des Bilderzeugungsmoduls nach einer weiteren Ausführungsform;
- Fig. 7: eine vergrößerte Teilschnittansicht des ersten Brillenglases einschließlich einer schematischen Darstellung des Bilderzeugungsmoduls nach einer weiteren Ausführungsform, und
- Fig. 8: eine schematische perspektivische Darstellung des ersten Brillenglases nach einer weiteren Ausführungsform.

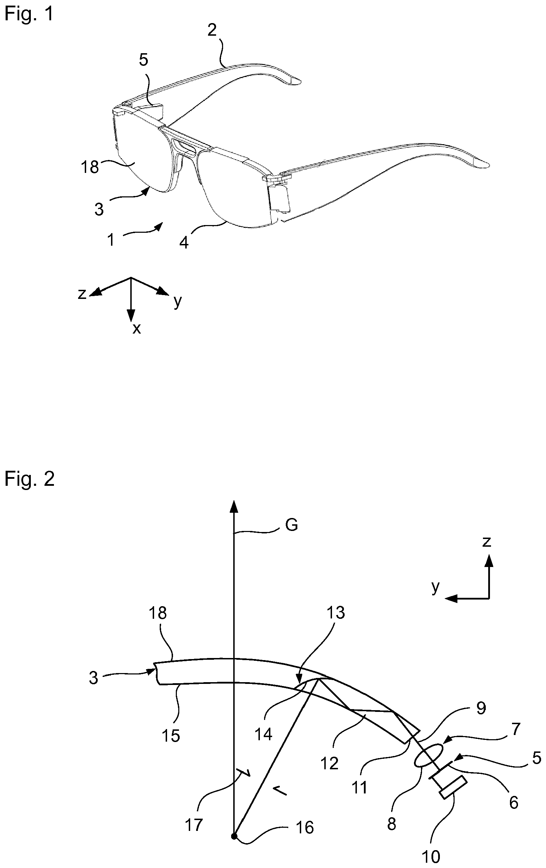

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfasst die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z.B. einen OLED-, einen LCD- oder einen LCoS-Chip oder eine Kippspiegelmatrix, mit einer Vielzahl von z.B. in Zeilen und Spalten angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch vom Lichtstrahl 9 die Rede ist.

Der vom Bildgeber 6 ausgehende Lichtstrahl 9 läuft durch das Optikelement 8 und tritt über einen Einkoppelabschnitt 11 in das erste Brillenglas 3 ein und wird in diesem entlang eines Lichtführungskanals 12 bis zu einem Auskoppelabschnitt 13 geführt. Der Auskoppelabschnitt 13 weist eine reflektive Umlenkfläche 14 auf, an der eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, des mittels des Bildgebers 6 erzeugte Bild als virtuelles Bild wahrnehmen, wenn er auf den Auskoppelabschnitt 13 blickt. Bei der hier beschriebenen Ausführungsform muss der Benutzer bezogen auf die Blickrichtung G eines Geradeausblickes um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt und in dem sich das Auge des Benutzers bewegen kann und er stets noch das erzeugte Bild als virtuelles Bild wahrnehmen kann.

Wie in der schematischen Darstellung in Fig. 2 gezeigt ist, ist sowohl die Rückseite 15 als auch die Vorderseite 18 des ersten Brillenglases 3 gekrümmt ausgebildet.

Die Führung der Lichtbündel 9 im Lichtführungskanal 12 kann z.B. durch innere Totalreflexion an der Vorderseite 18 und der Rückseite 15 erfolgen. Es ist auch möglich, dass die Vorderseite 18 und/oder die Rückseite 15 im Bereich des Lichtführungskanals eine reflektierende oder teilreflektierende Beschichtung aufweist, um die gewünschte Lichtführung zu bewirken.

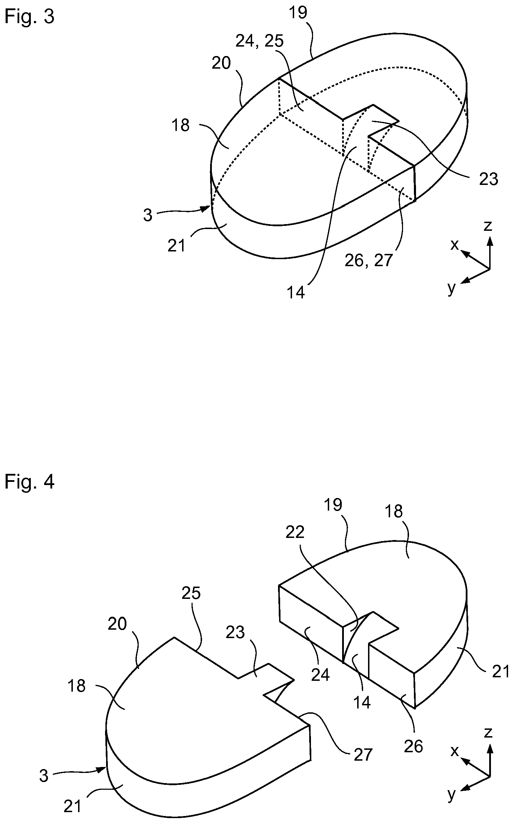

Wie insbesondere der schematischen Perspektivdarstellung des ersten Brillenglases 3 in Fig. 3 und der schematischen perspektivischen Explosionsdarstellung des ersten Brillenglases 3 in Fig. 4 zu entnehmen ist, ist das erste Brillenglas 3 mehrteilig ausgebildet. Bei der hier beschriebenen Ausführungsform umfasst das erste Brillenglas 3 ein erstes Teilbrillenglas 19 und ein zweites Teilbrillenglas 20. Zur Vereinfachung der Darstellung sind in Fig. 3 und 4 die Vorder- und Rückseite 18, 15 nicht gekrümmt sondern eben gezeigt.

Die Vorder- und Rückseite 18, 15 sind durch einen Rand 21 miteinander verbunden. Wie in Fig. 2 ersichtlich ist, erfolgt die Einkopplung der Lichtbündel 9 über einen Abschnitt 11 des Randes 21. Es ist jedoch auch möglich, die Lichtbündel 9 beispielsweise über die Rückseite 15 in das erste Brillenglas 3 einzukoppeln.

Durch die zweiteilige Ausbildung des ersten Brillenglases 3 kann der Auskoppelabschnitt 13 in einfacher Art und Weise gebildet werden. So kann die Form der reflektiven Umlenkfläche 14 in dem ersten Teilbrillenglas 19 durch die Ausnehmung 22 gebildet werden und die notwendige Beschichtung darauf aufgebracht werden. Danach kann das erste Teilbrillenglas 19 mit dem zweiten Teilbrillenglas 20 verbunden werden, das im Bereich der Ausnehmung 22 einen vorstehenden Abschnitt 23 mit komplementärer Form aufweist.

Der Lichtführungskanal 12 ist bei dem hier beschriebenen Ausführungsbeispiel vollständig im ersten Teilbrillenglas 19 ausgebildet und verläuft z.B. in der y-Richtung. Somit werden die eingekoppelten Lichtbündel 9 im ersten Teilbrillenglas 19 in der y-Richtung bis zum Auskoppelabschnitt 13 bzw. bis zur reflektiven Umlenkfläche 14 geführt.

Das erste Brillenglas 3 ist so geteilt, dass die Teilung quer zur ersten Richtung und somit in der x-Richtung verläuft. Dabei erstreckt sich die Teilung über die gesamte Ausdehnung des ersten Brillenglases in der x-Richtung. Es sind somit einander zugewandte Kontaktflächen 24 und 25 sowie 26 und 27 an den beiden Teilbrillengläsern 19 und 20 ausgebildet. Die Kontaktflächen 24 bis 27 zeichnen sich jeweils dadurch aus, dass sie sich über die gesamte Dicke des ersten Brillenglases und somit von der Vorderseite 18 bis zur Rückseite 15 erstrecken und dass sie sich in einer Richtung quer zur Lichtführungsrichtung im Lichtführungskanal 12 erstrecken. Die Verbindung der beiden Teilbrillengläser 19 und 20 kann somit durch Verkleben der einander zugewandten Kontaktflächen 24 und 25 sowie 26 und 27 durchgeführt werden. Damit kann in vorteilhafter Weise darauf verzichtet werden, den komplementären vorstehenden Abschnitt 23 mit der reflektiven Umlenkfläche 14 zu verkleben. Natürlich ist es auch möglich, auch diese beiden Teile der beiden Teilbrillengläser 19 und 20 miteinander zu verkleben, sofern dies gewünscht ist.

Die Kontaktflächen 24 bis 27 zeichnen sich insbesondere dadurch aus, dass sie sich jeweils vom Rand 21 des ersten Brillenglases 3 in einer Richtung quer zur Lichtführungsrichtung im Lichtführungskanal 12 und somit hier entlang der x-Richtung erstrecken. Bevorzugt erstrecken sie sich bis zur reflektiven Umlenkfläche 14, wie dies in Fig. 3 und 4 ersichtlich ist.

Natürlich können die Ausnehmung 22 im ersten Teilbrillenglas 19 sowie der vorstehende Abschnitt 23 des zweiten Teilbrillenglases 20 so ausgebildet sein, dass im zusammengesetzten Zustand ein Luftspalt zwischen ihnen vorhanden ist. In diesem Fall kann die Auskopplung über den Auskoppelabschnitt 13 durch eine innere Totalreflexion erfolgen.

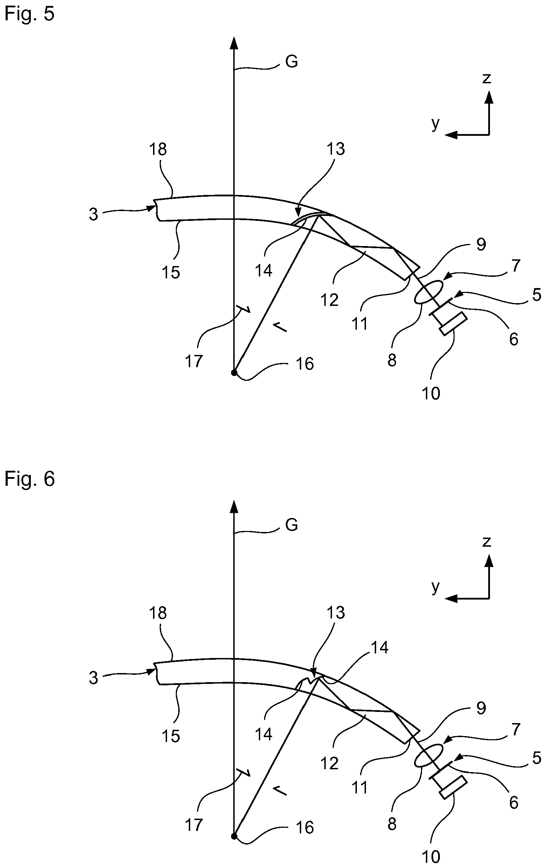

Eine solche Ausführungsform mit Luftspalt ist schematisch in Fig. 5 in einer Schnittdarstellung gemäß Fig. 2 gezeigt. Die Schnittdarstellung in Fig. 2 und 5 ist dabei so gewählt, dass der Schnitt durch die reflektive Umlenkfläche 14 verläuft.

Des weiteren ist es möglich, die Ausnehmung 22 so auszubilden, dass mehrere nebeneinander angeordnete Umlenkflächen 14, die auch als reflektive Facetten bezeichnet werden können, vorgesehen sind. Eine entsprechende Darstellung ist in Fig. 6 gezeigt. Dabei ist es möglich, dass sowohl die Ausnehmung 22 als auch der vorstehende Abschnitt 23 entsprechend ausgebildet sind, wie in der Schnittdarstellung in Fig. 6 gezeigt ist.

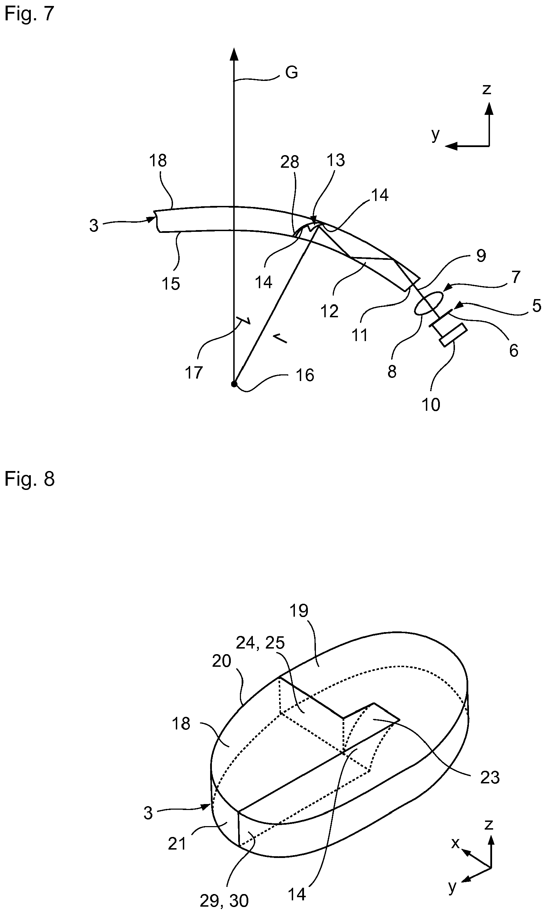

Ferner ist es möglich, die mehreren reflektiven Umlenkflächen 14 nur in der Ausnehmung 22 vorzusehen und diese dann mit einer glatten Oberseite auszubilden, so dass der vorstehende Abschnitt 23 wie in der Ausführungsform gemäß Fig. 3 und 4 ausgebildet sein kann. Eine entsprechende Schnittdarstellung ist in Fig. 7 gezeigt. Die Linie 28 deutet die glatte Unterseite des vorstehenden Abschnittes 23 an. Falls die reflektiven Umlenkflächen 14 in der Ausnehmung 22 mit dem gleichen Material wie das des zweiten Brillenteilkörpers 20 aufgefüllt sind, um die glatte Oberseite auszubilden, ist die Linie 28 in der Schnittdarstellung nicht sichtbar.

Die Kontaktflächen 24 und 26 liegen bevorzugt in der selben Ebene. Sie können jedoch auch zueinander versetzt und/oder zueinander verkippt sein. Gleiches gilt für die Kontaktflächen 25 und 27.

In Fig. 8 ist eine weitere Ausführungsform des erfindungsgemäßen ersten Brillenglases 3 gezeigt. Diese Ausführungsform unterscheidet sich von den bisher beschriebenen Ausführungsformen darin, dass anstatt der beiden Kontaktflächen 26 und 27 die Kontaktflächen 29 und 30 vorgesehen sind, die sich vom Rand 21 des ersten Brillenglases 3 entlang der Richtung der Lichtführung im Lichtführungskanal 12 und somit entlang der y-Richtung erstrecken. Somit ist in diesem Fall das erste Teilbrillenglas 19 im wesentlichen L-förmig ausgebildet und weist das zweite Teilbrillenglas 20 im wesentlichen eine Viertelkreisform bzw. ein Viertel einer Ellipse auf, so dass das zusammengesetzte Brillenglas 3 die gleiche Form wie bisher aufweist. Die Kontaktflächen 29 und 30 können wiederum miteinander verklebt sein. Wesentlich ist bei dieser Ausführungsform, dass die Kontaktflächen 24 und 25 sich vom Rand 21 in einer Richtung quer zur Lichtführungsrichtung und somit entlang der x-Richtung erstrecken.

In einer nicht gezeigten Abwandlung kann das zweite Teilbrillenglas im wesentlichen L-förmig ausgebildet sein und das erste Teilbrillenglas 19 die Viertelkreis- bzw. Viertelellipsenform aufweisen.

Die Kontaktflächen 29 und 30 müssen sich nicht entlang der y-Richtung erstrecken, sondern können auch andere Richtungen aufweisen. Bevorzugt ist im wesentlichen, dass das zusammengesetzte erste Brillenglas 3 aus den beiden Teilbrillengläsern 19 und 20 eine durchgehende Vorder- und Rückseite 18, 15 aufweisen.

Die Materialien der beiden Teilbrillengläser 19 und 20 sind bevorzugt gleich, so dass sie einen identischen Brechungsindex aufweisen.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeit) aufweisen. Wie in den Figuren gezeigt ist, sind sowohl die Vorderseite 18 als auch die Rückseite 15 gekrümmt ausgebildet. Die Vorderseite 18 ist insbesondere sphärisch gekrümmt. Wenn das Brillenglas 3, 4 eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muß nicht als brillenartige Haltevorrichtung ausgebildet sein. Es ist auch jede andere Art der Haltevorrichtung möglich, mit der ein Aufsetzen und Tragen der Anzeigevorrichtung auf dem Kopf erfolgen kann.

## Patentansprüche

1. Brillenglas für eine auf den Kopf eines Benutzers aufsetzbare und ein Bild erzeugende Anzeigevorrichtung (1),
wobei das Brillenglas (3) eine Vorderseite (18), eine Rückseite (15) und einen die Vorder- und Rückseite (18, 15) verbindenden Rand (21),
einen Einkoppelabschnitt (11) und einen vom Einkoppelabschnitt (11) beabstandeten Auskoppelabschnitt (13) sowie
einen Lichtführungskanal (12) aufweist, der dazu geeignet ist, Lichtbündel (9) von Pixeln des erzeugten Bildes, die über den Einkoppelabschnitt (11) des Brillenglases (3) in das Brillenglas (3) eingekoppelt sind, im Brillenglas (3) entlang einer ersten Richtung bis zum Auskoppelabschnitt (13) führen, von dem sie aus dem Brillenglas (3) ausgekoppelt werden, wobei das Brillenglas (3) mehrteilig aufgebaut ist und ein erstes Teilbrillenglas (19) und ein damit verbundenes zweites Teilbrillenglas (20) aufweist,
und wobei der Lichtführungskanal (12) im ersten Teilbrillenglas (19) verläuft und die beiden Teilbrillengläser (19, 20) über Kontaktflächen (24, 25, 26, 27) miteinander verbunden sind, die sich von der Vorderseite (18) bis zur Rückseite (15) erstrecken,
wobei sich die Kontaktflächen (24, 25, 26, 27) vom Rand (21) des Brillenglases (3) entlang einer vorbestimmten Länge in einer zweiten Richtung erstrecken
**dadurch gekennzeichnet, dass**
die zweite Richtung quer zur ersten Richtung verläuft.

2. Brillenglas nach Anspruch 1, bei dem der Auskoppelabschnitt (13) zumindest eine reflektive Fläche (14) aufweist, die im ersten Teilbrillenglas (19) ausgebildet ist.

3. Brillenglas nach Anspruch 1 oder 2, bei dem der Auskoppelabschnitt (13) zumindest eine reflektive Fläche (14) aufweist, die im zweiten Teilbrillenglas (20) ausgebildet ist.

4. Brillenglas nach Anspruch 2 oder 3, bei dem die zumindest eine reflektive Fläche (14) gekrümmt ausgebildet ist.

5. Brillenglas nach einem der obigen Ansprüche, bei dem zur Ausbildung des Auskoppelabschnitts (13) in einem der beiden Teilbrillengläser (19, 20) eine Ausnehmung (22) und im anderen der beiden Teilbrillengläser (19, 20) ein dazu komplementärer vorstehender Abschnitt (23) ausgebildet ist.

6. Brillenglas nach einem der obigen Ansprüche, bei dem sich zumindest eine der Kontaktflächen (24-27) vom Rand (21) des Brillenglases (3) bis zum Auskoppelabschnitt (13) erstreckt.

7. Brillenglas nach einem der obigen Ansprüche, bei dem die beiden Teilbrillengläser (19, 20) jeweils zwei Kontaktflächen (24 bis 27) aufweisen, die sich vom Rand (21) des Brillenglases bis zum Auskoppelabschnitt (13) erstrecken.

8. Brillenglas nach Anspruch 7, bei dem die beiden Kontaktflächen des ersten und zweiten Teilbrillenglases (19, 20) jeweils in einer Ebene liegen.

9. Brillenglas nach einem der obigen Ansprüche, bei dem die beiden Teilbrillengläser aus dem gleichen Material gebildet sind.

10. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Brillenglas (3) nach einem der obigen Ansprüche aufweist und die das erzeugte Bild im auf dem Kopf des Benutzers aufgesetzten Zustand der Haltevorrichtung (2) so abbildet, dass es der Benutzer als virtuelles Bild wahrnehmen kann.

## Claims

1. Spectacle lens for a display device (1) that can be fitted on the head of a user and generates an image,
wherein the spectacle lens (3) comprises a front side (18), a rear side (15) and an edge (21) connecting the front and rear side (18, 15),
a coupling-in section (11) and a coupling-out section (13) spaced apart from the coupling-in section (11), as well as
a light guiding channel (12) which is suitable for guiding light bundles (9) of pixels of the generated image, which are coupled into the spectacle lens (3) via the coupling-in section (11) of the spectacle lens (3), in the spectacle lens (3) along a first direction to the coupling-out section (13), by which they are coupled out of the spectacle lens (3),
wherein the spectacle lens (3) is constructed in several parts and comprises a first partial spectacle lens (19) and a second partial spectacle lens (20) connected thereto,
and wherein the light guiding channel (12) runs in the first partial spectacle lens (19) and the two partial spectacle lenses (19, 20) are connected to each other via contact surfaces (24, 25, 26, 27) which extend from the front side (18) to the rear side (15),
wherein the contact surfaces (24, 25, 26, 27) extend from the edge (21) of the spectacle lens (3) along a predetermined length in a second direction,
**characterized in that**
the second direction runs transversely with respect to the first direction.

2. Spectacle lens according to claim 1, in which the coupling-out section (13) comprises at least one reflective surface (14) which is formed in the first partial spectacle lens (19).

3. Spectacle lens according to claim 1 or 2, in which the coupling-out section (13) comprises at least one reflective surface (14) which is formed in the second partial spectacle lens (20).

4. Spectacle lens according to claim 2 or 3, in which the at least one reflective surface (14) is formed curved.

5. Spectacle lens according to one of the above claims, in which, for the formation of the coupling-out section (13), in one of the two partial spectacle lenses (19, 20) a recess (22) is formed and in the other of the two partial spectacle lenses (19, 20) a projecting section (23) which is complementary thereto is formed.

6. Spectacle lens according to one of the above claims, in which at least one of the contact surfaces (24-27) extends from the edge (21) of the spectacle lens (3) to the coupling-out section (13).

7. Spectacle lens according to one of the above claims, in which the two partial spectacle lenses (19, 20) each comprise two contact surfaces (24 to 27) which extend from the edge (21) of the spectacle lens to the coupling-out section (13).

8. Spectacle lens according to claim 7, in which the two contact surfaces of the first and second partial spectacle lens (19, 20) in each case lie in one plane.

9. Spectacle lens according to one of the above claims, in which the two partial spectacle lenses are formed from the same material.

10. Display device with
a holder (2) that can be fitted on the head of a user,
an image-generating module (5) secured to the holder (2), which generates an image, and
an imaging optical system (7) secured to the holder (2), which comprises a spectacle lens (3) according to one of the above claims and which, when the holder (2) is fitted on the user's head, images the generated image such that the user can perceive it as a virtual image.

## Revendications

1. Verre de lunettes pour un dispositif d'affichage (1) qui peut être posé sur la tête d'un utilisateur et qui génère une image,
le verre de lunettes (3) possédant un côté avant (18), un côté arrière (15) et un bord (21) qui relie les côtés avant et arrière (18, 15),
une portion d'injection (11) et une portion de sortie (13) espacée de la portion d'injection (11) ainsi qu'un canal de guidage de lumière (12), qui est adapté pour guider les faisceaux lumineux (9) des pixels de l'image générée, lesquels sont injectés dans le verre de lunettes (3) par le biais de la portion d'injection (11) du verre de lunettes (3), dans le verre de lunettes (3) le long d'une première direction jusqu'à la portion de sortie (13), par laquelle ils sont sortis du verre de lunettes (3), le verre de lunettes (3) étant construit en plusieurs parties et possédant un premier verre de lunettes partiel (19) et un deuxième verre de lunettes partiel (20) relié à celui-ci,
et le canal de guidage de lumière (12) suivant un tracé dans le premier verre de lunettes partiel (19) et les deux verres de lunettes partiels (19, 20) étant reliés l'un à l'autre par le biais de surfaces de contact (24, 25, 26, 27) qui s'étendent du côté avant (18) jusqu'au côté arrière (15),
les surfaces de contact (24, 25, 26, 27) s'étendant du bord (21) du verre de lunettes (3) le long d'une longueur prédéterminée dans une deuxième direction,
**caractérisé en ce que**
la deuxième direction suit un tracé transversal par rapport à la première direction.

2. Verre de lunettes selon la revendication 1, avec lequel la portion de sortie (13) possède au moins une surface réfléchissante (14) qui est formée dans le premier verre de lunettes partiel (19).

3. Verre de lunettes selon la revendication 1 ou 2, avec lequel la portion de sortie (13) possède au moins une surface réfléchissante (14) qui est formée dans le deuxième verre de lunettes partiel (20).

4. Verre de lunettes selon la revendication 2 ou 3, avec lequel l'au moins une surface réfléchissante (14) est de configuration courbe.

5. Verre de lunettes selon l'une des revendications précédentes, avec lequel, pour la formation de la portion de sortie (13), un creux (22) est formé dans l'un des deux verres de lunettes partiels (19, 20) et une portion saillante (23) complémentaire à celui-ci est formée dans l'autre des deux verres de lunettes partiels (19, 20).

6. Verre de lunettes selon l'une des revendications précédentes, avec lequel au moins l'une des surfaces de contact (24-27) s'étend du bord (21) du verre de lunettes (3) jusqu'à la portion de sortie (13).

7. Verre de lunettes selon l'une des revendications précédentes, avec lequel les deux verres de lunettes partiels (19, 20) possèdent respectivement deux surfaces de contact (24 à 27) qui s'étendent du bord (21) du verre de lunettes jusqu'à la portion de sortie (13).

8. Verre de lunettes selon la revendication 7, avec lequel les deux surfaces de contact du premier et du deuxième verre de lunettes partiel (19, 20) se trouvent respectivement dans un plan.

9. Verre de lunettes selon l'une des revendications précédentes, avec lequel les deux verres de lunettes partiels sont formés à partir du même matériau.

10. Dispositif d'affichage comprenant
un dispositif de maintien (2) qui peut être posé sur la tête d'un utilisateur,
un module de génération d'image (5) fixé au dispositif de maintien (2) et qui génère une image,
et
une optique de représentation (7) fixée au dispositif de maintien (2), laquelle possède un verre de lunettes (3) selon l'une des revendications précédentes et représente l'image générée dans l'état posé sur la tête de l'utilisateur du dispositif de maintien (2) de telle sorte que l'utilisateur peut la percevoir comme une image virtuelle.
